# EUROPEAN PATENT SPECIFICATION

(11) **EP 3 793 011 B1**
(45) Date of publication and mention of the grant of the patent: **24.04.2024**
(21) Application number: 19922248.0
(22) Date of filing: 20.09.2019
(51) Int. Cl.: H01M 4/525, C01G 53/00, H01M 4/505, H01M 10/052, H01M 10/0562

(54) **OXIDE-BASED POSITIVE ELECTRODE ACTIVE MATERIAL FOR ALL-SOLID-STATE LITHIUM ION BATTERIES, METHOD FOR PRODUCING PRECURSOR OF OXIDE-BASED POSITIVE ELECTRODE ACTIVE MATERIAL FOR ALL-SOLID-STATE LITHIUM ION BATTERIES, METHOD FOR PRODUCING OXIDE-BASED POSITIVE ELECTRODE ACTIVE MATERIAL FOR ALL-SOLID-STATE LITHIUM ION BATTERIES, AND ALL-SOLID-STATE LITHIUM ION BATTERY**
POSITIVELEKTRODENAKTIVMATERIAL AUF OXIDBASIS FÜR LITHIUM-IONEN-FESTKÖRPERBATTERIEN, VERFAHREN ZUR HERSTELLUNG EINES VORLÄUFERS VON POSITIVELEKTRODENAKTIVMATERIAL AUF OXIDBASIS FÜR LITHIUM-IONEN-FESTKÖRPERBATTERIEN, VERFAHREN ZUR HERSTELLUNG EINES POSITIVELEKTRODENAKTIVMATERIALS AUF OXIDBASIS FÜR LITHIUM-IONEN-FESTKÖRPERBATTERIEN UND LITHIUM-IONEN-FESTKÖRPERBATTERIE
MATÉRIAU ACTIF D'ÉLECTRODE POSITIVE À BASE D'OXYDE POUR BATTERIES AU LITHIUM-ION ENTIÈREMENT SOLIDE, PROCÉDÉ DE PRODUCTION DE PRÉCURSEUR DE MATÉRIAU ACTIF D'ÉLECTRODE POSITIVE À BASE D'OXYDE POUR BATTERIES AU LITHIUM-ION ENTIÈREMENT SOLIDE, PROCÉDÉ DE PRODUCTION DE MATÉRIAU ACTIF D'ÉLECTRODE POSITIVE À BASE D'OXYDE POUR BATTERIES AU LITHIUM-ION ENTIÈREMENT SOLIDE, ET BATTERIE AU LITHIUM-ION ENTIÈREMENT SOLIDE

(30) Priority: 29.03.2019 JP 2019069402
(43) Date of publication of application: 17.03.2021
(73) Proprietor: JX Metals Corporation, Tokyo 105-8417 (JP)
(72) Inventor: KAWAHASHI,Yasuhiro, Kitaibaraki-shi, Ibaraki 319-1535 (JP)
(74) Representative: Yeadon IP Limited
(86) International application number: PCT/JP2019/037138
(87) International publication number: WO 2020/202602

(56) References cited:
- EP-A1- 2 975 680
- WO-A1-2017/061504
- WO-A1-2018/043669
- WO-A1-2018/043669
- WO-A1-2018/079809
- JP-A- 2016 162 601
- JP-A- 2017 065 975
- JP-A- 2018 024 570
- JP-A- 2018 063 757
- JP-A- 2018 070 419
- US-A1- 2017 012 288

## Description

### FIELD OF THE INVENTION

The present invention relates to an oxide-based positive electrode active material for all-solid-state lithium ion batteries, a method for producing a precursor of oxide-based positive electrode active material for all-solid-state lithium ion batteries, a method for producing oxide-based positive electrode active material for all-solid-state lithium ion batteries, and an all-solid-state lithium ion battery.

### BACKGROUND OF THE INVENTION

With rapidly spreading of information relational devices and communication devices such as personal computers, video cameras, and mobile phones in recent years, development of batteries used as their power sources has been emphasized. Among the batteries, lithium batteries are attracting attention in terms of high energy density. Further, the high energy density and improvement of battery characteristics are also required for lithium secondary batteries in large-scale applications such as on-board power sources and road leveling.

However, for the lithium ion batteries, most of the electrolytes are organic compounds, and even if a flame-retardant compound is used, any risk of causing a fire could not be completely eliminated. As alternative candidates for such liquid-type lithium ion batteries, all-solid lithium ion batteries having a solid electrolyte have been attracting attention in recent years.

Also, as the positive electrode active material for non-aqueous electrolyte secondary batteries, lithium cobalt composite oxides represented by lithium cobaltate (LiCoO₂) as well as lithium nickel composite oxides represented by lithium nickelate (LiNiOz), and lithium manganese composite oxides represented by lithium manganate (LiMnO₂) are widely used.

By the way, lithium cobaltate has problems that it is expensive because a reserve of cobalt is less, and it contains cobalt as a main component, which has unstable supply and larger price changes. Therefore, a lithium nickel composite oxide or a lithium manganese composite oxide containing relatively inexpensive nickel or manganese as a main component has attracted attention in terms of cost (Patent Literatures 1 to 3). However, although lithium manganate has better thermal stability than that of lithium cobalt oxide, it has a charge/discharge capacity much lower than that of other materials, and also has a very short charge/discharge cycle characteristics which indicate its life. Therefore, the lithium manganate has many practical problems as a battery. On the other hand, lithium titanate exhibits a larger charge/discharge capacity than that of lithium cobaltate, and is thus expected as a positive electrode active material capable of producing a battery having a higher energy density with lower costs.

### CITATION LIST

### Patent Literatures

[Patent Literature 1] WO 2013/115544 A1
[Patent Literature 2] Japanese Patent Application Publication No. 2011-124086 A
[Patent Literature 3] WO 2015/008582 A1

### SUMMARY OF THE INVENTION

### Technical Problem

Although all-solid-state batteries that do not use a non-aqueous electrolyte solution which may cause firing, leaking or explosion improve safety, they cannot achieve good contact of a solid electrolyte with a positive electrode active material in a positive electrode layer, so that battery performance may be deteriorated. For example, when an electrical contact state is insufficient at an interface between the solid electrolyte and the positive electrode active material, it may cause deterioration of battery performance such as increased internal resistance of the battery and an insufficient capacity for battery function. Therefore, in order to improve the contact between the solid electrolyte and the positive electrode active material, it is considered that contact points are increased by decreasing a particle diameter of each particle. However, there is a problem that tap density is lowered by decreasing the particle diameter of the positive electrode active material, thereby decreasing energy density per volume. EP 2975680 discloses a material for a positive electrode having a particular tap density and average particle diameter D50.

Therefore, an object of an embodiment according to the present invention is to provide an oxide-based positive electrode active material for all-solid-state lithium ion batteries, which can obtain improved battery characteristics upon use for an all-solid-state lithium ion battery.

### Solution to Problem

In an embodiment, the present invention provides an oxide-based positive electrode active material for all-solid-state lithium ion batteries, the oxide-based positive electrode active material having a compositional formula represented by LiₐNiₓCo_{y}Mn_{1-x-y}O₂, with 0.98 ≤ a ≤ 1_{.}05; 0.8 ≤ x ≤ 1_{.}0; and 0 ≤ y ≤ 0_{.}20, wherein the oxide-based positive electrode active material has an average particle diameter D50 of from 1.0 to 5.0 µm, a tap density of from 1.6 to 2.5 g/cc, and a circularity of from 0.85 to 0.95.

In another embodiment, the present invention provides a method for producing a precursor of an oxide-based positive electrode active material for all-solid-state lithium ion batteries, the precursor having a compositional formula represented by a composite hydroxide NiₓCo_{y}Mn_{1-x-y}(OH)₂, with 0.8 ≤ x ≤ 1.0; and 0 ≤ y ≤ 0.20, the precursor having an average particle diameter D50 of from 1.0 to 5.0 µm and a circularity of from 0.85 to 0.95, wherein the method comprises a step of performing a crystallization reaction using an aqueous solution containing basic aqueous solutions of a nickel salt, a cobalt salt, a manganese salt, an aqueous ammonia and an alkali metal as a reaction solution while controlling a pH of the reaction solution to a range of from 10.5 to 11.5, and an ammonium ion concentration to a range of from 5 to 25 g/L and a temperature of the reaction solution to a range of from 50 to 65 °C.

In the method for producing the precursor of the oxide-based positive electrode active material for all-solid-state lithium ion batteries according to an embodiment of the present invention, the crystallization reaction comprises allowing the reaction solution to react by stirring the reaction solution at a required stirring power per unit volume of from 1.8 to 7.3 kW/m³ in a reaction vessel.

In yet another embodiment, the present invention provides a method for producing an oxide-based positive electrode active material for all-solid-state lithium ion batteries, the method comprising steps of: mixing the precursor produced by the method for producing the precursor of the oxide-based positive electrode active material for all-solid-state lithium ion batteries according to the present invention with a lithium compound such that a ratio of an atomic number of lithium to a sum (Me) of atomic numbers of Ni, Co and Mn (Li / Me) is from 0.98 to 1.05, to form a lithium mixture; and firing the lithium mixture in an oxygen atmosphere at a temperature of 450 to 520 °C for 2 to 15 hours, and then further firing it at a temperature of 680 to 850 °C for 2 to 15 hours.

In still another embodiment, the present invention provides an all-solid-state lithium ion battery comprising a positive electrode layer, a negative electrode layer, and a solid electrolyte layer, wherein the positive electrode layer comprises the oxide-based positive electrode active material for all-solid-state lithium ion batteries according to the present invention.

### Advantageous Effects of Invention

According to the embodiment of the present invention, it is possible to provide an oxide-based positive electrode active material for all-solid-state lithium ion batteries, which can obtain improved battery characteristics upon use for an all-solid-state lithium ion battery.

### BRIEF DESCRIPTION OF THE DRAWINGS

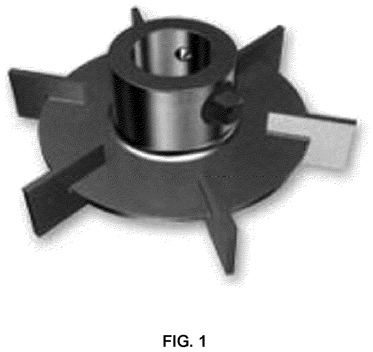

FIG. 1 is a schematic external view of a flat disk turbine.

### DETAILED DESCRIPTION OF THE INVENTION

### (Configuration of Oxide-Based Positive Electrode Active Material for All-Solid-State Lithium Ion Batteries)

An oxide-based positive electrode active material for all-solid-state lithium ion batteries according to an embodiment of the present invention has a compositional formula represented by:

LiₐNiₓCo_{y}Mn_{1-x-y}O₂

in which 0.98 ≤ a ≤ 1.05; 0.8 ≤ x ≤ 1.0; and 0 ≤ y ≤ 0.20.

In the oxide-based positive electrode active material for all-solid-state lithium ion batteries according to an embodiment of the present invention, a composition of Li of less than 0.98 leads to an insufficient amount of lithium and a difficulty to maintain a stable crystal structure. The composition of Li more than 1.05 may decrease a discharge capacity of an all-solid-state lithium ion battery produced using the positive electrode active material.

The oxide-based positive electrode active material for all-solid-state lithium ion batteries according to an embodiment of the present invention has a controlled average particle diameter D50 of from 1.0 to 5.0 µm. Such a configuration can lead to a lager contact area between a solid electrolyte and a positive electrode active material, resulting in good conductivity of Li ions between the positive electrode active material and the solid electrolyte. The average particle diameter D50 may be 1.5 µm or more, or 2.5 µm or more, or 3.0 µm or more. Further, the average particle diameter D50 may be 5.0 µm or less, or 4.5 µm or less, or 3.5 µm or less.

The oxide-based positive electrode active material for all-solid-state lithium ion batteries according to an embodiment of the present invention has a controlled tap density of from 1.6 to 2.5 g/cc. When the oxide-based positive electrode active material according to the present invention is used for an all-solid-state lithium ion battery, such a configuration can lead to an increased energy density per volume of the oxide-based positive electrode active material for all-solid-state lithium ion batteries, resulting in an improved battery capacity and an improved battery capacity retention ratio. The tap density is preferably from 1.8 to 2.5 g/cc, and more preferably from 2.0 to 2.5 g/cc.

The oxide-based positive electrode active material for all-solid-state lithium ion batteries according to an embodiment of the present invention has a controlled circularity of from 0.85 to 0.95. Such a configuration can allow the tap density to be controlled to the range of from 1.6 to 2.5 g/cc regardless of the lower average particle diameter D50 of from 1.0 to 5.0 µm. As a result, the oxide-based positive electrode active material for all-solid lithium ion batteries can be provided with an increased contact area between the solid electrolyte and the positive electrode active material, and improved conductivity of Li ions between the positive electrode active material and the solid electrolyte, as well as a higher energy density per volume.

### (Method for Producing Precursor of Oxide-Based Positive Electrode Active Material for All-Solid-State Lithium Ion Batteries)

A precursor of the oxide-based positive electrode active material for all-solid-state lithium ion batteries according to an embodiment of the present invention has a compositional formula represented by NiₓCo_{y}Mn_{1-x-y}(OH)₂, a composite hydroxide, in which 0.8 ≤ x ≤ 1.0; and 0 ≤ y ≤ 0.20. The precursor has an average particle diameter D50 of from 1.0 to 5.0 µm, and a circularity of from 0.85 to 0.95.

The method for producing the precursor of the oxide-based positive electrode active material for all-solid-state lithium ion batteries according to an embodiment of the present invention includes a step of performing a crystallization reaction using an aqueous solution containing basic aqueous solutions of a nickel salt, a cobalt salt, a manganese salt, an aqueous ammonia and an alkali metal as a reaction solution while controlling a pH of the reaction solution to a range of from 10.5 to 11.5, and an ammonium ion concentration to a range of from 5 to 25 g/L and a temperature of the reaction solution to a range of from 50 to 65 °C.

The method for producing the precursor of the oxide-based positive electrode active material for all-solid-state lithium ion batteries according to an embodiment of the present invention is characterized by performing the crystallization reaction while thus controlling the pH, the ammonium ion concentration, and the temperature of the reaction solution to the fixed ranges. According to this method, it is possible to produce the precursor of the oxide-based positive electrode active material for all-solid-state lithium ion batteries, which has an average particle diameter D50 of from 1.0 to 5.0 µm and a circularity of from 0.85 to 0.95.

In the method for producing the precursor of the oxide-based positive electrode active material for all-solid lithium ion batteries according to an embodiment of the present invention, the crystallization reaction is performed while controlling the pH, the ammonium ion concentration and the temperature of the reaction solution to the fixed ranges as described above. For this purpose, for example, three raw materials of (1) a mixed aqueous solution of a nickel salt, a cobalt salt and a manganese salt, (2) an aqueous ammonia solution and (3) a basic aqueous solution of an alkali metal are continuously fed in small amounts to a reaction vessel to react with one another. As a specific example, the crystallization reaction may be performed by continuously feeding (1) the mixed aqueous solution of the nickel salt, the cobalt salt, and the manganese salt at 0.60 L/h, (2) the aqueous ammonia at 0.40 L/h, and (3) the aqueous solution of sodium hydroxide at 0.35 Uh to a 10 L reaction vessel. By thus continuously feeding the three raw materials to the reaction vessel in small amounts to react with them, variations in the pH and the ammonia concentration of the reaction solution in the reaction vessel are satisfactorily suppressed, resulting in easy controls of the pH of the reaction solution to the range of from 10.5 to 11.5 and the ammonium ion concentration to the range of from 5 to 25 g/L.

The basic aqueous solution of the alkali metal of the above (3) may be an aqueous solution of sodium hydroxide, potassium hydroxide, carbonate or the like. Further, examples of the aqueous solution of the carbonate include an aqueous solution of a carbonate-based salt such as an aqueous solution of sodium carbonate, an aqueous solution of potassium carbonate, an aqueous solution of sodium hydrogen carbonate, and an aqueous solution of potassium hydrogen carbonate.

The method for producing the precursor of the oxide-based positive electrode active material for all-solid-state lithium ion batteries according to an embodiment of the present invention performs the crystallization reaction while controlling the pH of the reaction solution to the range of from 10.5 to 11.5. However, if the pH is less than 10.5, the solubility of the metal in the reaction solution may be increased, and a ratio of the metal in the produced precursor may be decreased, thereby deviating from the adjusted composition ratio of the metal salt. If the pH is more than 11.5, a particle diameter of the produced precursor is too small, so that the tap density of the positive electrode active material may be decreased, and the energy density per volume may be decreased. The pH of the reaction solution may be 10.7 or more, or 10.9 or more, or 11.3 or less, or 11.1 or less.

The method for producing the precursor of the oxide-based positive electrode active material for all-solid-state lithium ion batteries according to an embodiment of the present invention performs the crystallization reaction while controlling the ammonium ion concentration in the reaction solution to the range of from 5 to 25 g/L. According to such a configuration, the solubility of nickel and cobalt is increased, and the particle diameter can be appropriately adjusted even in a higher pH range. Further, the tap density of the oxide-based positive electrode active material for all-solid-state lithium ion batteries produced by using the produced precursor is increased, so that the energy density per volume can be increased. The ammonium ion concentration in the reaction solution is preferably from 10 to 22 g/L, and even more preferably from 15 to 20 g/L.

The method for producing the precursor of the oxide-based positive electrode active material for all-solid-state lithium ion batteries according to an embodiment of the present invention performs the crystallization reaction while controlling the temperature of the reaction solution to the range of from 50 to 65 °C. If the temperature is less than 50 °C, the particle diameter of the produced precursor will be too large, so that when it is used as a positive electrode active material, the contact area with the solid electrolyte becomes insufficient, resulting in higher resistance. As a result, any movement of lithium during charging/discharging may be hindered and rate characteristics may be deteriorated. The temperature of more than 65 °C may cause a risk of a defective device or a disadvantage in terms of energy cost.

In the crystallization reaction, the reaction solution is preferably allowed to react by stirring it at a required stirring power per unit volume of from 1.8 to 7.3 kW/m³ in the reaction vessel. Such a configuration can provide satisfactory suppression of the generation of coarse particles due to precipitation of a precursor hydroxide having a lower average particle diameter and to aggregation of fine particles. As a result, the precursor of the oxide-based positive electrode active material for all-solid-state lithium ion batteries having a circularity of from 0.85 to 0.95 can be satisfactorily produced.

The required stirring power per unit volume is calculated by the following equation 1: required stirring power per unit volume (kW/m3) = number of power Np × specific gravity of solution (kg/m3) × {rotation speed (rpm)/60}3 × {blade diameter (m)}5/volume of reaction solution (m3)

As an example, a flat disk turbine having the stirring blade shape as shown in FIG. 1 can be used. For the calculation, the specific gravity of the solution is 988.07 kg/m³, which is the specific gravity of pure water, the blade diameter is 80 mm, and the volume of the reaction solution is 10 L. The number of power Np employs "the number of power Np = 3.62" which is obtained by actually measuring the power of the stirrer at 800 rpm in the reaction vessel containing 10 L of water. The required stirring power per unit volume at each rotation speed can be calculated by the above equation 1.

According to the method for producing the precursor of the oxide-based positive electrode active material for all-solid-state lithium ion batteries according to an embodiment of the present invention, the precursor having the lower particle diameter and the higher circularity can be produced. Therefore, the precursor is fired under predetermined conditions as described later to increase the circularity, whereby the oxide-based positive electrode active material for all-solid-state lithium ion batteries having the lower particle diameter as well as the higher tap density can be produced. As a result, the oxide-based positive electrode active material for all-solid-state lithium ion batteries, which has improved battery characteristics upon use for an all-solid-state lithium ion battery, can be obtained.

### (Method for Producing Oxide-Based Positive Electrode Active Material for All-Solid-State Lithium Ion Batteries)

The method for producing the oxide-based positive electrode active material for all-solid-state lithium ion batteries according to an embodiment of the present invention includes steps of: mixing the precursor produced by the above method with a lithium compound such that a ratio of an atomic number of lithium to a sum (Me) of atomic numbers of Ni, Co and Mn (Li / Me) is from 0.98 to 1.05, to form a lithium mixture; and firing the lithium mixture in an oxygen atmosphere at a temperature of 450 to 520 °C for 2 to 15 hours, and then further firing it at a temperature of 680 to 850 °C for 2 to 15 hours. The firing of the lithium mixture at a temperature of less than 680 °C may cause a problem that the precursor does not sufficiently react with the lithium compound. Also, the firing of the lithium mixture at a temperature of more than 850 °C may cause a problem that oxygen is released from the crystal structure.

According to the method for producing the oxide-based positive electrode active material for all-solid lithium ion batteries according to an embodiment of the present invention, the precursor is produced by performing the crystallization reaction using the aqueous solution containing the basic aqueous solutions of the nickel salt, the cobalt salt, the manganese salt, the aqueous ammonia and the alkali metal as a reaction solution while controlling the pH of the reaction solution to the range of from 10.5 to 11.5, the ammonium ion concentration to the range of from 5 to 25 g/L, and the temperature of the reaction solution to the range of from 40 to 65 °C. Therefore, it is possible to produce the transition metal precursor which has higher crystallinity and reacts well during the firing. The precursor is then mixed with the lithium source at a molar ratio of Li / (Ni + Co + Mn) = 0.98 to 1.05 and fired at 450 to 520 °C for 2 to 15 hours, and then further fired at 680 to 850 °C for 2 to 15 hours, whereby the oxide-based positive electrode active material for all-solid-state lithium ion batteries having the average particle diameter D50 of from 1.0 to 5.0 µm, the tap density of from 1.6 to 2.5 g/cc, and the circularity of from 0.85 to 0.95 can be produced.

### (All-Solid-State Lithium Ion Battery Including Oxide-Based Positive Electrode Active Material for All-Solid-State Lithium Ion Batteries)

By forming a positive electrode layer using the oxide-based positive electrode active material for all-solid-state lithium ion batteries according to the embodiment of the present invention, an all-solid-state lithium ion battery including a solid electrolyte layer, the positive electrode layer, and a negative electrode layer can be produced.

### EXAMPLES

Hereinafter, Examples are provided for better understanding of the present invention and its advantages, but the present invention is not limited to these Examples.

As shown below, a precursor of an oxide-based positive electrode active material and an oxide-based positive electrode active material were prepared in each of Examples 1 to 13 and Comparative Examples 1 to 6, and an average particle diameter D50, a circularity, and a tap density were measured for each of the precursors and the oxide-based positive electrode active materials. Further, battery characteristics of an all-solid-state lithium ion battery with each positive electrode active material were measured. Furthermore, contents of Li, Ni, Mn, and Co in each positive electrode active material were measured by an inductively coupled plasma emission spectrophotometer (ICP-OES) and an ion chromatography. From the analysis results, a, x, and y of the compositional formula: LiₐNiₓCo_{y}Mn_{1-x-y} representing the positive electrode active material were determined. As a result, it was confirmed that the composition was the same as that shown in the positive electrode active material preparation conditions in Table 1 as described later. It should be noted that the ratio Li/Me in Table 1 corresponds to the "a" in the above formula.

### (Examples 1 to 13 and Comparative Examples 1 to 6)

Each of 1.5 mol/L aqueous solutions of nickel sulfate, cobalt sulfate and manganese sulfate was prepared, and a predetermined amount of each aqueous solution was weighed, and the mixed metal salt solution was adjusted such that a ratio of Ni:Co:Mn was each mol% ratio in Table 1. The solution was fed to a reaction vessel equipped with a stirring blade inside the vessel.

Subsequently, while operating the stirring blade at each required stirring power per unit volume as shown in Table 1, an aqueous ammonia and 20% by mass of an aqueous solution of sodium hydroxide were added into the mixed solution in the reaction vessel such that the pH and the ammonium ion concentration of the mixed solution in the reaction vessel were values as shown in Table 1, and a composite hydroxide Ni-Co-Mn was co-precipitated by the crystallization method. The temperature of the mixed solution in the reaction vessel at this time was maintained with a water jacket such that it was each reaction temperature as shown in Table 1.

The required stirring power per unit volume as described above was calculated by the following equation 1: required stirring power per unit volume (kW/m3) = number of power Np × specific gravity of solution (kg/m3) × {rotation speed (rpm)/60}3 × {blade diameter (m)}5/volume of reaction solution (m3)

A flat disk turbine having the stirring blade shape as shown in FIG. 1 was used. The calculation was carried out at a specific gravity of the reaction solution of 988.07 kg/m³, a blade diameter of 80 mm, and a volume of the reaction solution of 10 L. The number of power Np employed "the number of power Np = 3.62" which was obtained by actually measuring the power of the stirrer at 800 rpm in the reaction vessel containing 10 L of water. The required stirring power per unit volume at each rotation speed was calculated by the above equation 1.

Further, a nitrogen gas was introduced into the reaction vessel to prevent oxidation of the coprecipitate produced by the reaction. The gas introduced into the reaction vessel is not limited to the above nitrogen gas, and any gas can be used as long as it is a gas that does not promote the oxidation, such as helium, neon, argon, and carbon dioxide.

The coprecipitate was suctioned and filtered, and then washed with pure water, and dried at 120 °C for 12 hours. The composition: NiₓCo_{y}Mn_{1-x-y}(OH)₂, the average particle diameter D50, and the circularity of the Ni-Co-Mn composite hydroxide particles thus produced were measured.

The composite hydroxide particles were then combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was each value as shown in Table 1, and mixed together in an automatic mortar for 30 minutes. The mixed powder was filled in an alumina saggar, and fired in a muffle furnace at the firing temperature 1 as shown in Table 1 for 4 hours, and then further fired at the firing temperature 2 as shown in Table 1 for 8 hours, in an oxygen atmosphere, to prepare an oxide-based positive electrode active material.

### - Average Particle Diameter D50 -

The average particle diameter D50 of each of the precursors of the oxide-based positive electrode active material and the oxide-based positive electrode active materials was measured by Microtrac MT 3300 EXII.

### - Circularity -

The circularity of each of the precursors of the oxide-based positive electrode active material and the oxide-based positive electrode active materials was determined by filter processing from optical images of more than or equal to 20,000 particles acquired by a particle image analyzer "Morphologi G3" from Malvern using a parameter "solidity = 0.93".

### - Tap Density -

The tap density of each oxide-based positive electrode active material was determined using a tap denser from SEISHIN ENTERPRISE Co., Ltd. Specifically, 5 g of each oxide-based positive electrode active material was placed in a 10 cc graduated cylinder, which was located in the tap denser, vibrated 1500 times in up and down directions. The scale of the graduated cylinder was read, and the tap density was calculated from the volume and mass of each oxide-based positive electrode active material.

### - Battery Characteristics -

Hereinafter, each all-solid-state battery cell was produced in a glove box in an argon atmosphere. Each of the oxide-based positive electrode active materials obtained in Examples 1 to 13 and Comparative Examples 1 to 6 was coated with LiOC₂H₅ and Nb(OC₂H₅)₅, and then fired in an oxygen atmosphere at 400 °C for 1 hour to prepare a positive electrode active material having a surface coated with an amorphous layer of lithium niobate.

Subsequently, 75 mg of the positive electrode active material having the coated surface was mixed with 25 mg of a sulfide solid electrolyte material Li₃PS₄ to obtain a positive electrode mixture.

Further, 80 mg of the sulfide solid electrolyte material Li₃PS₄ was pressed at a pressure of 5 MPa using a pellet molding machine to form a solid electrolyte layer. Onto the solid electrolyte layer, 10 mg of the positive electrode mixture was put and pressed at a pressure of 30 MPa to prepare a mixture layer.

The resulting mixture layer of the solid electrolyte layer and the positive electrode active material layer was turned upside down, and the side of the solid electrolyte layer was provided with a Li foil (a diameter of 5 mm x a thickness of 0.1 mm) attached to a SUS sheet, and pressed at a pressure of 20 MPa to form a Li negative electrode layer, thereby producing a laminate in which the positive electrode active material layer, the solid electrolyte layer, and the Li negative electrode layer were laminated in this order.

The laminate was then placed in a battery test cell made of SUS 304 and a restraining pressure was applied to obtain an all-solid-state secondary battery, and 25 °C battery initial characteristics (a charge capacity, a discharge capacity, charge/discharge characteristics) were measured. The charging/discharging was carried out under charging conditions: CC/CV 4.2 V, 0.1 C, and discharging conditions: CC 0.05 C, up to 3.0V.

Table 1 shows the test conditions and evaluation results according to Examples 1 to 13 and Comparative Examples 1 to 6.

**Table 1**

| | Coprecipitalion Reaction Conditions | | | | | Precursor Powder Characteristics | | Positive Electrode Active Material Preparation Condistions | | | | | | Positive Electrode Active Material Powder Characteristics | | | Electrochemical Characteristics |
|---|---|---|---|---|---|---|---|---|---|---|---|---|---|---|---|---|---|
| | Reaction Temperature | Ammonium Ion Concentration | Rotation Speed | Stirring Power | pH | Average Particle Diameter D50 | Circularity | Ni | Co | Mn | LiMe Ratio | Firing Temperature 1 | Firing Temperature 2 | Average Particle Diameter D50 | Tap | Circularity | Discharge Capacity |
| | °C | g/L | | kW/m³ | | µm | - | mol% | mol% | mol% | | °C | °C | µm | g/cc | - | mAh/g |
| Example 1 | 60 | 15 | 1000 | 5.5 | 11.3 | 4.2 | 0.91 | 80.0 | 10.0 | 10.0 | 1.01 | 500 | 800 | 4.4 | 2.4 | 0.90 | 183 |
| Example 2 | 60 | 15 | 1000 | 5.5 | 11.3 | 4.2 | 0.91 | 80.0 | 10.0 | 10.0 | 0.98 | 500 | 800 | 4.1 | 2.3 | 0.91 | 181 |
| Example 3 | 60 | 15 | 700 | 1.8 | 11.3 | 4.9 | 0.85 | 80.0 | 10.0 | 10.0 | 1.01 | 500 | 800 | 5.0 | 2.5 | 0.87 | 184 |
| Example 4 | 60 | 15 | 1100 | 7.3 | 11.3 | 3.6 | 0.95 | 80.0 | 10.0 | 10.0 | 1.01 | 500 | 800 | 3.6 | 2.2 | 0.95 | 181 |
| Example 5 | 50 | 22 | 1000 | 5.5 | 11.5 | 3.7 | 0.88 | 80.0 | 10.0 | 10.0 | 1.01 | 500 | 800 | 3.8 | 2.2 | 0.88 | 183 |
| Example 6 | 50 | 9 | 1000 | 5.5 | 10.8 | 3.9 | 0.89 | 80.0 | 10.0 | 10.0 | 103 | 500 | 760 | 4.0 | 2.2 | 0.90 | 184 |
| Example 7 | 60 | 25 | 1000 | 5.5 | 11.5 | 2.3 | 0.86 | 80.0 | 0.0 | 20.0 | 1.02 | 520 | 850 | 2.7 | 2.0 | 0.85 | 176 |
| Example 8 | 60 | 25 | 1000 | 5.5 | 11.5 | 2.3 | 0.86 | 80.0 | 0.0 | 20.0 | 1.05 | 450 | 850 | 2.8 | 2.1 | 0.86 | 173 |
| Example 9 | 65 | 25 | 1000 | 5.5 | 11.5 | 1.8 | 0.85 | 80.0 | 0.0 | 20.0 | 1.01 | 450 | 820 | 2.3 | 1.8 | 0.85 | 172 |
| Example 10 | 65 | 14 | 1000 | 5.5 | 10.5 | 3.7 | 0.87 | 90.0 | 7.0 | 3.0 | 0.98 | 500 | 740 | 3.7 | 2.0 | 0.87 | 196 |
| Example 11 | 65 | 14 | 1000 | 5.5 | 10.5 | 3.7 | 0.87 | 90.0 | 7.0 | 3.0 | 1.00 | 500 | 740 | 4.0 | 2.1 | 0.88 | 196 |
| Example 12 | 65 | 8 | 1100 | 7.3 | 11 | 1.1 | 0.85 | 90.0 | 7.0 | 3.0 | 1.00 | 500 | 740 | 1.3 | 1.6 | 0.85 | 193 |
| Example 13 | 40 | 5 | 900 | 4.0 | 11.3 | 3.1 | 0.86 | 100.0 | 0.0 | 0.0 | 1.00 | 520 | 680 | 3.4 | 2.1 | 0.86 | 199 |
| Comparative Example 1 | 60 | 15 | 600 | 1.2 | 11.3 | 7.2 | 0.83 | 80.0 | 10.0 | 10.0 | 1.00 | 520 | 650 | 7.4 | 2.3 | 0.84 | 154 |
| Comparative Example 2 | 60 | 5 | 700 | 1.8 | 11.3 | 3.5 | 0.82 | 80.0 | 10.0 | 10.0 | 0.96 | 500 | 800 | 3.7 | 2.1 | 0.81 | 166 |
| Comparative Example 3 | 60 | 27 | 1200 | 9.5 | 11.7 | 0.7 | 0.81 | 80.0 | 0.0 | 20.0 | 1.01 | 520 | 850 | 0.9 | 1.2 | 0.80 | 155 |
| Comparative Example 4 | 40 | 25 | 1000 | 5.5 | 11.5 | 12.4 | 0.92 | 80.0 | 0.0 | 20.0 | 1.07 | 450 | 850 | 13.8 | 2.7 | 0.91 | 160 |
| Comparative Example 5 | 65 | 20 | 600 | 1.2 | 10.3 | 8.7 | 0.82 | 90.0 | 7.0 | 3.0 | 1.01 | 500 | 740 | 8.9 | 2.2 | 0.82 | 162 |
| Comparative Example 6 | 35 | 3 | 600 | 1.2 | 11.5 | 9.3 | 0.81 | 100.0 | 0.0 | 0.0 | 1.00 | 520 | 680 | 9.4 | 2.2 | 0.80 | 173 |

## Claims

1. An oxide-based positive electrode active material for all-solid-state lithium ion batteries, the oxide-based positive electrode active material having a compositional formula represented by:
LiₐNiₓCo_{y}Mn_{1-x-y}O₂, with 0.98 ≤ a ≤ 1.05; 0.8 ≤ x ≤ 1.0; and 0 ≤ y ≤ 0.20,
wherein the oxide-based positive electrode active material has an average particle diameter D50 of from 1.0 to 5.0 µm, a tap density of from 1.6 to 2.5 g/cc, and a circularity of from 0.85 to 0.95.

2. A method for producing a precursor of an oxide-based positive electrode active material for all-solid-state lithium ion batteries, the precursor having a compositional formula represented by:
a composite hydroxide NiₓCo_{y}Mn_{1-x-y}(OH)₂, with 0.8 ≤ x ≤ 1.0; and 0 ≤ y ≤ 0.20,
the precursor having an average particle diameter D50 of from 1.0 to 5.0 µm and a circularity of from 0.85 to 0.95,
wherein the method comprises a step of performing a crystallization reaction using an aqueous solution containing basic aqueous solutions of a nickel salt, a cobalt salt, a manganese salt, an aqueous ammonia and an alkali metal as a reaction solution while controlling a pH of the reaction solution to a range of from 10.5 to 11.5, and an ammonium ion concentration to a range of from 5 to 25 g/L and a temperature of the reaction solution to a range of from 50 to 65 °C.

3. The method for producing the precursor of the oxide-based positive electrode active material for all-solid-state lithium ion batteries according to claim 2, wherein the crystallization reaction comprises allowing the reaction solution to react by stirring the reaction solution at a required stirring power per unit volume of from 1.8 to 7.3 kW/m³ in a reaction vessel.

4. A method for producing an oxide-based positive electrode active material for all-solid-state lithium ion batteries,
wherein the method comprises steps of:
mixing the precursor produced by the method for producing the precursor of the oxide-based positive electrode active material for all-solid-state lithium ion batteries according to claim 2 or 3 with a lithium compound such that a ratio of an atomic number of lithium to a sum (Me) of atomic numbers of Ni, Co and Mn (Li / Me) is from 0.98 to 1.05, to form a lithium mixture; and
firing the lithium mixture in an oxygen atmosphere at a temperature of 450 to 520 °C for 2 to 15 hours, and then further firing it at a temperature of 680 to 850 °C for 2 to 15 hours.

5. An all-solid-state lithium ion battery, comprising a positive electrode layer, a negative electrode layer, and a solid electrolyte layer,
wherein the positive electrode layer comprises the oxide-based positive electrode active material for all-solid-state lithium ion batteries according to claim 1.

## Patentansprüche

1. Positivelektrodenaktivmaterial auf Oxidbasis für Lithium-Ionen-Festkörperbatterien, wobei das Positivelektrodenaktivmaterial auf Oxidbasis eine Zusammensetzungsformel hat, die wiedergegeben wird durch:
LiₐNiₓCo_{y}Mn_{1-x-y}O₂, wobei 0,98 ≤ a ≤ 1,05; 0,8 ≤ x ≤ 1,0; und 0 ≤ y ≤ 0,20,
wobei das Positivelektrodenaktivmaterial auf Oxidbasis einen durchschnittlichen Partikeldurchmesser D50 von 1,0 bis 5,0 µm, eine Klopfdichte von 1,6 bis 2,5 g/cm³ und eine Rundheit von 0,85 bis 0,95 hat.

2. Verfahren zur Herstellung eines Vorläufers eines Positivelektrodenaktivmaterials auf Oxidbasis für Lithium-Ionen-Festkörperbatterien, wobei der Vorläufer eine Zusammensetzungsformel hat, die wiedergegeben wird durch:
ein Verbundhydroxid NiₓCo_{y}Mn_{1-x-y}(OH)₂, wobei 0,8 ≤ x ≤ 1,0; und 0 ≤ y ≤ 0,20,
wobei der Vorläufer eine durchschnittliche Partikelgröße D50 von 1,0 bis 5,0 µm und eine Rundheit von 0,85 bis 0,95 hat,
wobei das Verfahren einen Schritt des Durchführens einer Kristallisationsreaktion unter Verwendung einer wässrigen Lösung umfasst, die basische wässrige Lösungen von einem Nickelsalz, einem Kobaltsalz, einem Mangansalz, von wässrigem Ammoniak und einem Alkalimetall als Reaktionslösung enthält, während der pH-Wert der Reaktionslösung auf einen Bereich von 10,5 bis 11,5 gesteuert wird, und mit einer Ammoniumionenkonzentration in einem Bereich von 5 bis 25 g/L und einer Temperatur der Reaktionslösung in einem Bereich von 50 bis 65 °C.

3. Verfahren zur Herstellung des Vorläufers des Positivelektrodenaktivmaterials auf Oxidbasis für Lithium-Ionen-Festkörperbatterien nach Anspruch 2, wobei die Kristallisationsreaktion umfasst, dass die Reaktionslösung reagieren gelassen wird, indem die Reaktionslösung mit einer erforderlichen Rührleistung pro Volumeneinheit von 1,8 bis 7,3 kW/m³ in einem Reaktionsgefäß gerührt wird.

4. Verfahren zur Herstellung eines Positivelektrodenaktivmaterials auf Oxidbasis für Lithium-Ionen-Festkörperbatterien,
wobei das Verfahren die Schritte umfasst:
Mischen des Vorläufers, der nach dem Verfahren zur Herstellung des Vorläufers des Positivelektrodenaktivmaterials auf Oxidbasis für Lithium-Ionen-Festkörperbatterien nach Anspruch 2 oder 3 hergestellt worden ist, mit einer Lithiumverbindung, so dass ein Verhältnis der Ordnungszahl von Lithium zu der Summe (Me) der Ordnungszahlen von Ni, Co und Mn (Li / Me) 0,98 bis 1,05 beträgt, um eine Lithiummischung zu bilden; und
Brennen der Lithiummischung in einer Sauerstoffatmosphäre bei einer Temperatur von 450 bis 520 °C für 2 bis 15 Stunden, und dann weiter Brennen derselben bei einer Temperatur von 680 bis 850 °C für 2 bis 15 Stunden.

5. Festkörper-Lithiumionenbatterie, umfassend eine Positivelektrodenschicht, eine Negativelektrodenschicht und eine feste Elektrolytschicht,
wobei die Positivelektrodenschicht das Positivelektrodenaktivmaterial auf Oxidbasis für Lithium-Ionen-Festkörperbatterien nach Anspruch 1 umfasst.

## Revendications

1. Matériau actif d'électrode positive à base d'oxyde pour des batteries au lithium-ion entièrement solide, le matériau actif d'électrode positive à base d'oxyde ayant une formule compositionnelle représentée par :
LiₐNiₓCo_{y}Mn_{1-x-y}O₂, avec 0,98 ≤ a ≤ 1,05 ; 0,8 ≤ x ≤ 1,0 ; et 0 ≤ y ≤ 0,20,
dans laquelle le matériau actif d'électrode positive à base d'oxyde a un diamètre moyen de particules D50 de 1,0 à 5,0 µm, une densité après tassement de 1,6 à 2,5 g/cc et une circularité de 0,85 à 0,95.

2. Procédé de production d'un précurseur d'un matériau actif d'électrode positive à base d'oxyde pour des batteries au lithium-ion entièrement solide, le précurseur ayant une formule compositionnelle représentée par :
un hydroxyde composite NiₓCo_{y}Mn_{1-x-y}(OH)₂, avec 0,8 ≤ x ≤ 1,0 ; et 0 ≤ y ≤ 0,20,
le précurseur ayant un diamètre moyen de particules D50 de 1,0 à 5,0 µm et une circularité de 0,85 à 0,95,
dans lequel le procédé comprend une étape de réalisation d'une réaction de cristallisation utilisant une solution aqueuse contenant des solutions aqueuses basiques d'un sel de nickel, d'un sel de cobalt, d'un sel de manganèse, un ammoniac aqueux et un métal alcalin comme solution de réaction tout en contrôlant un pH de la solution de réaction dans une plage de 10,5 à 11,5, et une concentration d'ions ammonium dans une plage de 5 à 25 g/L et une température de la solution de réaction dans une plage de 50 à 65 °C.

3. Procédé de production du précurseur du matériau actif d'électrode positive à base d'oxyde pour batteries au lithium-ion entièrement solide selon la revendication 2, dans lequel la réaction de cristallisation consiste à laisser la solution de réaction réagir en agitant la solution de réaction à une puissance d'agitation requise par unité de volume de 1,8 à 7,3 kW/m³ dans une cuve de réaction.

4. Procédé de production d'un matériau actif d'électrode positive à base d'oxyde pour des batteries au lithium-ion entièrement solide,
dans lequel le procédé comporte les étapes consistant à :
mélanger le précurseur produit par le procédé de production du précurseur du matériau actif d'électrode positive à base d'oxyde pour batteries au lithium-ion entièrement solide selon la revendication 2 ou 3 avec un composé de lithium de sorte qu'un rapport d'un numéro atomique de lithium à une somme (Me) des nombres atomiques du Ni, du Co et du Mn (Li/Me) est de 0,98 à 1,05, pour former un mélange de lithium ; et
cuire le mélange de lithium dans une atmosphère d'oxygène à une température de 450 à 520 °C pendant 2 à 15 heures, et puis cuire à une température de 680 à 850 °C pendant 2 à 15 heures.

5. Batterie au lithium-ion entièrement solide, comprenant une couche d'électrode positive, une couche d'électrode négative et une couche d'électrolyte solide,
dans laquelle la couche d'électrode positive comprend le matériau actif d'électrode positive à base d'oxyde pour des batteries au lithium-ion entièrement solide selon la revendication 1.
